# EUROPÄISCHE PATENTSCHRIFT

(11) **EP 3 518 471 B1**
(45) Veröffentlichungstag und Bekanntmachung des Hinweises auf die Patenterteilung: **29.07.2020**
(21) Anmeldenummer: 18153191.4
(22) Anmeldetag: 24.01.2018
(51) Int. Cl.: H04L 12/40, H04W 84/12, H04W 92/00

(54) **FUNK-KOMMUNIKATIONSSYSTEM FÜR EIN INDUSTRIELLES AUTOMATISIERUNGSSYSTEM UND VERFAHREN ZUM BETRIEB EINES FUNK-KOMMUNIKATIONSSYSTEMS**
RADIO COMMUNICATION SYSTEM FOR AN INDUSTRIAL AUTOMATION SYSTEM AND METHOD FOR OPERATING A RADIO COMMUNICATION SYSTEM
SYSTÈME DE RADIOCOMMUNICATION POUR UN SYSTÈME D'AUTOMATISATION INDUSTRIELLE ET PROCÉDÉ DE FONCTIONNEMENT D'UN SYSTÈME DE RADIOCOMMUNICATION

(43) Veröffentlichungstag der Anmeldung: 31.07.2019
(73) Patentinhaber: Siemens Aktiengesellschaft, 80333 München (DE)
(72) Erfinder: Kloiber, Bernhard, 83620 Feldkirchen-Westerham (DE); Richter, Siegfried, 91207 Lauf (DE); Kornbichler, Andreas, 83623 Dietramszell (DE)

(56) Entgegenhaltungen:
- WO-A1-2014/187893
- GIANLUCA CENA ET AL: "Dynamic duplicate deferral techniques for redundant Wi-Fi networks", PROCEEDINGS OF THE 2014 IEEE EMERGING TECHNOLOGY AND FACTORY AUTOMATION (ETFA), 1. September 2014 (2014-09-01), Seiten 1-8, XP055288729, DOI: 10.1109/ETFA.2014.7005156 ISBN: 978-1-4799-4845-1
- CENA GIANLUCA ET AL: "An enhanced MAC to increase reliability in redundant Wi-Fi networks", 2014 10TH IEEE WORKSHOP ON FACTORY COMMUNICATION SYSTEMS (WFCS 2014), IEEE, 5. Mai 2014 (2014-05-05), Seiten 1-10, XP032608485, DOI: 10.1109/WFCS.2014.6837591 [gefunden am 2014-06-17]

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geraten kompensieren zu können, sind Kommunikationsprotokolle, wie Media Redundancy Protocol, High-availability Seamless Redundancy oder Parallel Redundancy Protocol, für hochverfügbare, redundant betreibbare industrielle Kommunikationsnetze entwickelt worden. Media Redundancy Protocol (MSR) ist im Standard IEC 62439 definiert und ermöglicht eine Kompensation einzelner Verbindungsausfälle in Netzen mit einfacher Ringtopologie bei stoßbehafteter redundanter Übertragung von Nachrichten. Entsprechend Media Redundancy Protocol ist einem Switch mit zwei Ports innerhalb der Ringtopologie ein Redundanz-Manager zugeordnet, der das Netz auf Verbindungsausfälle überwacht und ggf. eine Schaltmaßnahme für einen Ringschluss einleitet.

Stoßbehaftete Medienredundanzverfahren lassen sich grundsätzlich mit relativ geringem Aufwand realisieren. Nachteilig ist jedoch, dass einerseits Nachrichten im Fehlerfall verloren gehen können und andererseits während einer Rekonfiguration eines Kommunikationsnetzes zunächst ein Störungszustand vorliegt. Ein derartiger Störungszustand muss durch ein überlagertes Kommunikationsprotokoll, beispielsweise mittels TCP/IP auf Vermittlungs- bzw. Transportschichtebene, gesichert werden, um eine Unterbrechung einer Kommunikationsverbindung zu vermeiden.

Auch PROFINET (IEC 61158 Type 10) referenziert Media Redundancy Protocol als stoßbehaftetes Medienredundanzverfahren innerhalb eines Kommunikationsnetzes mit Ringtopologie. Media Redundancy Planned Duplication (MRPD) stellt demgegenüber eine Erweiterung für eine stoßfreie Übertragung von isochronen Echtzeitdaten dar. Bei Media Redundancy Planned Duplication handelt es sich jedoch nicht um ein anwendungsneutrales stoßfreies Medienredundanzverfahren, sondern um eine PROFINET-spezifische Erweiterung.

High-availability Seamless Redundancy (HSR) und Parallel Redundancy Protocol (PRP) sind im Standard IEC 62439-3 definiert und ermöglichen eine stoßfreie redundante Übertragung von Nachrichten mit äußerst geringen Erholungszeiten. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

Im Standard IEC 62439-3 sind für das Parallel Redundancy Protocol (PRP) aufgrund verhältnismäßig langer Latenzlaufzeiten in Drahtlos-Kommunikationssystemen und eines dadurch bedingten nicht-deterministischen Übertragungsverhaltens bislang ausschließlich kabelgebundene Übertragungsstrecken vorgeschrieben. In "Towards a Reliable Parallel Redundant WLAN Black Channel", Markus Rentschier, Per Laukemann, IEEE 2012 wird eine Eignung von WLAN-Übertragungsstrecken in PRP-Kommunikationsnetzen untersucht. Mittels paralleler Anwendung unterschiedlicher Diversitätstechniken für beispielsweise Raum, Zeit und Frequenz können in WLAN-Kommunikationsnetzen Auswirkungen von stochastischem Kanalschwund hinreichend kompensiert werden.

Aus EP 2 712 124 A1 ist ein redundant betriebenes industrielles Kommunikationssystem mit redundant an ein industrielles Kommunikationsnetz angebundenen Kommunikationsgeräten bekannt, bei dem eine Nachrichtenübermittlung zumindest abschnittsweise kabellos erfolgt. Im industriellen Kommunikationsnetz ist eine Mehrzahl von Puffer-Speichereinheiten für an einem Netzknoten kabelgebunden empfangene und von diesem kabellos zu sendende Nachrichtenelemente vorgesehen. Bei Überschreiten einer maximalen Puffer-Größe wird ein ältestes in der jeweiligen Puffer-Speichereinheit befindliches Nachrichtenelement gelöscht. Bis zu einem Überschreiten der maximalen Puffer-Größe wird das älteste Nachrichtenelement als nächstes kabellos zu sendendes Nachrichtenelement ausgewählt.

In einem redundant betreibbaren industriellen Kommunikationssystem ist ein erstes Kommunikationsgerät mit Redundanzfunktion entsprechend EP 3 211 838 A1 über einen ersten und zweiten Kommunikationsnetzanschluss redundant an einen ersten Switch o.ä. angeschlossen. Analog dazu ist ein zweites Kommunikationsgerät mit Redundanzfunktion über einen ersten und zweiten Kommunikationsnetzanschluss redundant an einen zweiten Switch o.ä. angeschlossen ist. Vom ersten Kommunikationsnetzanschluss des ersten und des zweiten Kommunikationsgeräts an den jeweiligen Switch übermittelte Datenrahmen werden einem ersten virtuellen lokalen Netz zugeordnet, während vom zweiten Kommunikationsnetzanschluss des ersten und des zweiten Kommunikationsgeräts an den jeweiligen Switch übermittelte Datenrahmen einem zweiten virtuellen lokalen Netz zugeordnet werden. Dem ersten virtuellen lokalen Netz zugeordnete Datenrahmen werden mittels einer jeweiligen ersten Funk-Transceiver-Station über ein erstes Funknetz gesendet, während dem zweiten virtuellen lokalen Netz zugeordnete Datenrahmen mittels einer jeweiligen zweiten Funk-Transceiver-Station über ein zweites Funknetz gesendet werden.

EP 3 211 962 A1 betrifft ein Funk-Kommunikationssystem für ein industrielles Automatisierungssystem, bei dem zumindest ein erstes und ein zweites Kommunikationsgerät redundant an ein industrielles Kommunikationsnetz angebunden sind. Das erste und das zweite Kommunikationsgerät sind jeweils über ihren ersten und über ihren Kommunikationsnetzanschluss mittel- oder unmittelbar mit einer jeweiligen ersten und mit einer jeweiligen zweiten Funk-Transceiver-Station verbunden. Die ersten und zweiten Funk-Transceiver-Stationen legen eine Reihenfolge für innerhalb eines vorgegebenen Zeitintervalls zu sendende Datenrahmen anhand den zu sendenden Datenrahmen zugeordneter Ziel-MAC-Adressen fest. Die Reihenfolge innerhalb an eine ausgewählte Ziel-MAC-Adresse zu sendender Datenrahmen wird durch ihre Eingangsreihenfolge festgelegt.

Aus WO 2014/187893 A1 ist ein System entsprechend dem Oberbegriff von Anspruch 1 bekannt. Insbesondere wird dort ein Timing Combining angewendet, durch das dem ein erstmalig vollständig empfangenes Datagramm sofort weitergeleitet wird und später über redundante Pfade ankommende Kopien verworfen werden. Ein System entsprechend dem Oberbegriff von Anspruch 1 ist auch aus "Dynamic duplicate deferral techniques for redundant Wi-Fi networks", Gianluca Cena et al., PROCEEDINGS OF THE 2014 IEEE EMERGING TECHNOLOGY AND FACTORY AUTOMATION (ETFA), 1. September 2014 (2014-09-01), Seiten 1-8 sowie aus "An enhanced MAC to increase reliability in redundant Wi-Fi networks", Gianluca Cena et al., 2014 10TH IEEE WORKSHOP ON FACTORY COMMUNICATION SYSTEMS (WFCS 2014), IEEE, 5. Mai 2014 (2014-05-05), Seiten 1-10 bekannt.

In "Space-Time Coded Cooperative Multicasting with Maximal Ratio Combining and Incremental Redundancy", A. Del Coso et al., PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1. Juni 2007 (2007-06-01), Seiten 6079-6084 ist beschrieben, dass Redundanzbehandlungseinheiten redundant gesendete Datenrahmen aus unterschiedlichen Datenrahmenfragmenten mittels Maximum-ratio Combining, Selection Combining oder Incremental Redundancy wiederherstellen. Entsprechendes ist auch aus dem Wikipedia-Artikel "Diversity Combining" bekannt (am 14.02.2019 im Internet unter https://en.wikipedia.org/w/index.php?title=Diversity_combinin g&oldid=773378736 gefunden).

Der vorliegenden Erfindung liegt die Aufgabe zugrunde, ein ausfallsicheres Funk-Kommunikationssystem für ein industrielles Automatisierungssystem zu schaffen, das eine effizientere Funk-Ressourcennutzung ermöglicht, ein Verfahren zu dessen Betrieb sowie geeignete Systemkomponenten anzugeben.

Diese Aufgabe wird erfindungsgemäß durch ein Funk-Kommunikationssystem mit den in Anspruch 1 angegebenen Merkmalen, durch eine Funk-Basisstation mit den in Anspruch 14 angegebenen Merkmalen, durch eine Funk-Teilnehmerstation mit den in Anspruch 15 angegebenen Merkmalen und durch ein Verfahren mit den in Anspruch 16 angegebenen Merkmalen gelöst. Vorteilhafte Weiterbildungen der vorliegenden Erfindung sind in den abhängigen Ansprüchen angegeben.

Das erfindungsgemäße Funk-Kommunikationssystem für ein industrielles Automatisierungssystem weist zumindest eine Funk-Basisstation auf, die zumindest eine Funk-Sende- und -Empfangseinheit umfasst. Außerdem ist zumindest eine mit der Funk-Basisstation verbindbare Funk-Teilnehmerstation vorgesehen, die zumindest eine Funk-Sende- und -Empfangseinheit umfasst. Die Funk-Basisstation und die Funk-Teilnehmerstation sind dafür ausgestaltet und eingerichtet, miteinander Datenrahmen auszutauschen, die zumindest über eine ausgewählte Trägerfrequenz übertragen werden.

Die Funk-Basisstation und die Funk-Teilnehmerstation umfassen erfindungsgemäß jeweils eine Multiplexereinheit für redundant zu sendende Datenrahmen. Darüber hinaus sind die Funk-Basisstation und die Funk-Teilnehmerstation jeweils dafür ausgestaltet und eingerichtet, redundant zu sendende Datenrahmen parallel über mehrere voneinander verschiedene Trägerfrequenzen zu übertragen. Außerdem umfassen die Funk-Basisstation und die Funk-Teilnehmerstation jeweils eine Redundanzbehandlungseinheit zur Verarbeitung empfangener redundanter Datenrahmen. Die Redundanzbehandlungseinheiten sind jeweils für eine Detektion empfangener redundanter Datenrahmen bzw. für eine Wiederherstellung redundant gesendeter Datenrahmen aus unterschiedlichen Datenrahmenfragmenten ausgestaltet und eingerichtet.

Das erfindungsgemäße Funk-Kommunikationssystem bietet eine signifikante Reduktion von Latenz und Jitter, insbesondere indem redundante Informationen parallel über mehrere unterschiedliche Trägerfrequenzen statt seriell übertragen werden. Bei üblicher Separation der Trägerfrequenzen ist es zudem sehr unwahrscheinlich, dass auf mehreren Trägerfrequenzen gleichzeitig durch dieselbe Störquelle Interferenzen hervorgerufen werden. Somit bietet das erfindungsgemäße Funk-Kommunikationssystem eine erhöhte Unempfindlichkeit gegenüber Interferenzen.

Entsprechend einer bevorzugten Ausgestaltung der vorliegenden Erfindung sind die Funk-Basisstation und die Funk-Teilnehmerstation jeweils dafür ausgestaltet und eingerichtet, für eine Übertragung redundant zu sendender Datenrahmen verwendete Trägerfrequenzen entsprechend Inter-band Carrier Aggregation zu separieren. Damit kann die vorliegende Erfindung auf Basis bewährter standardisierter Verfahren realisiert werden. Darüber hinaus können die Multiplexereinheiten jeweils dafür ausgestaltet und eingerichtet sein, über voneinander verschiedene Trägerfrequenzen redundant zu sendende Datenrahmen entsprechend jeweils unterschiedlicher Codierungsschemata zu codieren. Dies ermöglicht eine nochmals erhöhte Unempfindlichkeit gegenüber Störungen.

Die Redundanzbehandlungseinheiten sind erfindungsgemäß für eine Wiederherstellung redundant gesendeter Datenrahmen aus unterschiedlichen Datenrahmenfragmenten mittels Maximum-ratio Combining, Selection Combining oder Incremental Redundancy ausgestaltet und eingerichtet. Mit derartigen Redundanzkonzepten ist auch dann noch eine erfolgreiche Wiederherstellung redundant gesendeter Datenrahmen möglich, wenn sich Störungen auf mehrere oder alle Trägerfrequenzen auswirken.

Vorzugsweise sind die Funk-Basisstation und die Funk-Teilnehmerstation jeweils dafür ausgestaltet und eingerichtet, für eine Übertragung redundant zu sendender Datenrahmen verwendete Trägerfrequenzen Signalqualitätswerte bzw. Übertragungsfehler zu ermitteln. Auf Basis einer entsprechenden fortlaufenden Überwachung können verwendete Trägerfrequenzen beispielsweise adaptiv ausgewählt werden. Darüber hinaus können die Funk-Basisstation und die Funk-Teilnehmerstation jeweils dafür ausgestaltet und eingerichtet sein, anhand ermittelter Signalqualitätswerte bzw. Übertragungsfehler eine Coderaten-Adaption für eine Übertragung redundant zu sendender Datenrahmen durchzuführen. Vorteilhafterweise erfolgt bei einem unterhalb eines vorgegebenen Schwellwerts liegendem Signalqualitätswert bzw. bei oberhalb eines vorgegebenen Schwellwerts liegenden Übertragungsfehlern eine Coderaten-Verringerung. Außerdem kann bei einem oberhalb eines vorgegebenen Schwellwerts liegendem Signalqualitätswert bzw. bei unterhalb eines vorgegebenen Schwellwerts liegenden Übertragungsfehlern eine Coderaten-Erhöhung erfolgen. Insbesondere kann die Coderaten-Adaption Trägerfrequenz-individuell erfolgen.

Entsprechend einer weiteren vorteilhaften Ausgestaltung der vorliegenden Erfindung sind die Funk-Basisstation und die Funk-Teilnehmerstation jeweils dafür ausgestaltet und eingerichtet, anhand ermittelter Signalqualitätswerte bzw. Übertragungsfehler geänderte oder zusätzliche Trägerfrequenzen für eine Übertragung redundant zu sendender Datenrahmen auszuwählen oder verwendete Trägerfrequenzen freizugeben. Vorteilhafterweise sind die Funk-Basisstation und die Funk-Teilnehmerstation jeweils dafür ausgestaltet und eingerichtet, potentielle Interferenzquellen bzw. störungsfrei nutzbare Trägerfrequenzen mittels Cognitive Radio zu ermitteln.

Erfindungsgemäß sind die Funk-Basisstation und die Funk-Teilnehmerstation jeweils dafür ausgestaltet und eingerichtet, für eine Übertragung als zeitkritisch gekennzeichneter Datenrahmen nicht mehr benötigter Trägerfrequenzen temporär für eine Übertragung als zeitunkritisch gekennzeichneter Datenrahmen freizugeben. Entsprechend einer weiteren vorteilhaften Ausgestaltung sind die Funk-Basisstation und die Funk-Teilnehmerstation jeweils dafür ausgestaltet und eingerichtet, temporär für eine Übertragung als zeitunkritisch gekennzeichneter Datenrahmen freigegebene Trägerfrequenzen präemptiv für eine Übertragung als zeitkritisch gekennzeichneter Datenrahmen zuzuteilen.

Entsprechend einer bevorzugten Ausgestaltung der vorliegenden Erfindung sind die Funk-Basisstation und die Funk-Teilnehmerstation jeweils für eine CSMA-Kollisionsvermeidung und zur Anwendung von Listen Before Talk für ein Abhören einer größeren Anzahl von Trägerfrequenzen als tatsächlich verwendet ausgestaltet. Insbesondere sind die Funk-Basisstation und die Funk-Teilnehmerstation vorzugsweise einem Wireless Local Area Network, einem WiMAX-, einem UMTS-, einem LTE-, einem 5G-Mobilfunknetz oder einem sonstigen Mobilfunknetz zugeordnet.

Die erfindungsgemäße Funk-Basisstation ist für ein Kommunikationssystem entsprechend vorangehenden Ausführungen vorgesehen und weist zumindest eine Funk-Sende- und -Empfangseinheit auf. Die Funk-Basisstation ist dafür ausgestaltet und eingerichtet, mit zumindest einer Funk-Teilnehmerstation Datenrahmen auszutauschen, die zumindest über eine ausgewählte Trägerfrequenz übertragen werden. Außerdem umfasst die Funk-Basisstation eine Multiplexereinheit für redundant zu sendende Datenrahmen.

Darüber hinaus ist die erfindungsgemäße Funk-Basisstation dafür ausgestaltet und eingerichtet, redundant zu sendende Datenrahmen parallel über mehrere voneinander verschiedene Trägerfrequenzen zu übertragen. Zusätzlich umfasst die Funk-Basisstation eine Redundanzbehandlungseinheit zur Verarbeitung empfangener redundanter Datenrahmen. Die Redundanzbehandlungseinheit ist für eine Detektion empfangener redundanter Datenrahmen bzw. für eine Wiederherstellung redundant gesendeter Datenrahmen aus unterschiedlichen Datenrahmenfragmenten ausgestaltet und eingerichtet.

Die erfindungsgemäße Funk-Teilnehmerstation ist für ein Kommunikationssystem entsprechend vorangehenden Ausführungen vorgesehen und weist zumindest eine Funk-Sende- und -Empfangseinheit auf. Die Funk-Teilnehmerstation ist dafür ausgestaltet und eingerichtet, mit zumindest einer Funk-Basisstation Datenrahmen auszutauschen, die zumindest über eine ausgewählte Trägerfrequenz übertragen werden. Außerdem umfasst die Funk-Teilnehmerstation eine Multiplexereinheit für redundant zu sendende Datenrahmen.

Des Weiteren ist die erfindungsgemäße Funk-Teilnehmerstation dafür ausgestaltet und eingerichtet, redundant zu sendende Datenrahmen parallel über mehrere voneinander verschiedene Trägerfrequenzen zu übertragen. Zusätzlich umfasst die Funk-Teilnehmerstation eine Redundanzbehandlungseinheit zur Verarbeitung empfangener redundanter Datenrahmen. Die Redundanzbehandlungseinheit ist für eine Detektion empfangener redundanter Datenrahmen bzw. für eine Wiederherstellung redundant gesendeter Datenrahmen aus unterschiedlichen Datenrahmenfragmenten ausgestaltet und eingerichtet.

Das erfindungsgemäße Verfahren ist zum Betrieb eines Funk-Kommunikationssystems entsprechend vorangehenden Ausführungen vorgesehen, wobei das Funk-Kommunikationssystem zumindest eine Funk-Basisstation mit zumindest einer Funk-Sende- und -Empfangseinheit und zumindest eine mit der Funk-Basisstation verbindbare Funk-Teilnehmerstation aufweist, die zumindest eine Funk-Sende- und -Empfangseinheit umfasst. Die Funk-Basisstation und die Funk-Teilnehmerstation tauschen miteinander Datenrahmen aus, die zumindest über eine ausgewählte Trägerfrequenz übertragen werden. Sowohl die Funk-Basisstation als auch die Funk-Teilnehmerstation umfassen jeweils eine Multiplexereinheit für redundant zu sendende Datenrahmen.

Darüber hinaus übertragen die Funk-Basisstation und die Funk-Teilnehmerstation entsprechend dem erfindungsgemäßen Verfahren jeweils redundant zu sendende Datenrahmen parallel über mehrere voneinander verschiedene Trägerfrequenzen. Die Funk-Basisstation und die Funk-Teilnehmerstation umfassen außerdem jeweils eine Redundanzbehandlungseinheit zur Verarbeitung empfangener redundanter Datenrahmen. Die Redundanzbehandlungseinheiten detektieren jeweils empfangene redundante Datenrahmen bzw. stellen redundant gesendete Datenrahmen aus unterschiedlichen Datenrahmenfragmenten wieder her.

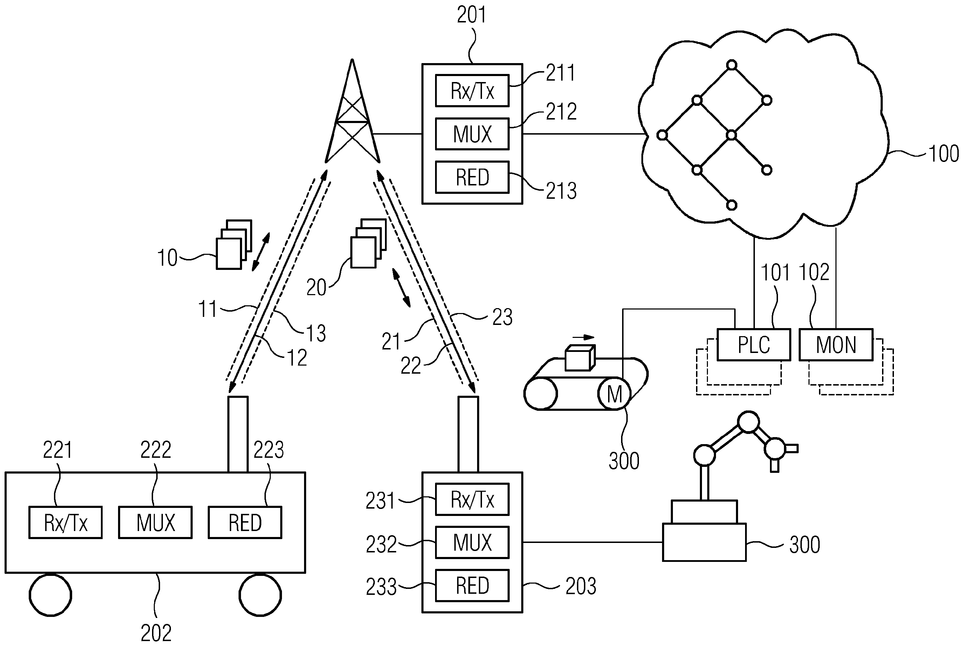

Die vorliegende Erfindung wird nachfolgend an einem Ausführungsbeispiel anhand der Zeichnung näher erläutert. Es zeigt die
- Figur: ein industrielles Automatisierungssystem mit einem Kommunikationsnetz und einem an dieses angeschlossenen Funk-Kommunikationssystem.

Das in der Figur dargestellte industrielle Automatisierungssystem umfasst ein Kommunikationsnetz 100, an das mehrere Automatisierungsgeräte 101, 102 und ein Funk-Kommunikationssystem angeschlossen sind. Das Funk-Kommunikationssystem umfasst im vorliegenden Ausführungsbeispiel eine drahtgebunden mit dem Kommunikationsnetz 100 verbundene Funk-Basisstation 201 und mehrere mit der Funk-Basisstation 201 verbindbare Funk-Teilnehmerstationen 202, 203.

Das Kommunikationsnetz 100 umfasst eine Vielzahl von Netzknoten, an denen Netzinfrastrukturgeräte vorgesehen sind. Die Netzinfrastrukturgeräte 200-202 können beispielsweise Switche, Router oder Firewalls sein und zum Anschluss von Automatisierungsgeräten 101, 102 dienen. Zu Automatisierungsgeräten zählen insbesondere speicherprogrammierbaren Steuerungen 101, Eingabe/Ausgabe-Einheiten (I/O-Module) oder Bedien- und Beobachtungsstationen 102 des industriellen Automatisierungssystems.

Speicherprogrammierbare Steuerungen 101 umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über ihr Kommunikationsmodul kann eine speicherprogrammierbare Steuerung 101 beispielsweise mit einem Switch oder Router oder zusätzlich mit einem Feldbus verbunden werden. Die Eingabe/AusgabeEinheit dient einem Austausch von Steuerungs- und Messgrößen zwischen einer speicherprogrammierbaren Steuerung 101 und einem mit der speicherprogrammierbaren Steuerung 101 verbundenen Sensor bzw. einer gesteuerten Maschine oder Anlage 300. Ein Sensor bzw. eine Maschine oder Anlage 300 kann grundsätzlich auch über das Funk-Kommunikationssystem mit einer speicherprogrammierbaren Steuerung 101 verbunden werden. Die Zentraleinheit einer speicherprogrammierbaren Steuerung 101 ist insbesondere für eine Ermittlung geeigneter Steuerungsgrößen aus erfassten Messgrößen vorgesehen. Obige Komponenten einer speicherprogrammierbaren Steuerung 101 können beispielsweise über ein Rückwandbus-System miteinander verbunden werden.

Eine Bedien- und Beobachtungsstation 102 dient insbesondere zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 102 zur Anzeige von Werten eines Regelungskreises und zur Veränderung von Regelungsparametern verwendet. Bedien- und Beobachtungsstationen 102 umfassen zumindest eine graphische Benutzerschnittstelle, ein Eingabegerät, eine Prozessoreinheit und ein Kommunikationsmodul.

Sowohl die Funk-Basisstation 201 als auch die Funk-Teilnehmerstationen 202, 203 umfassen jeweils neben einer Antennenanordnung eine Funk-Sende- und -Empfangseinheit 211, 221, 231. Die Funk-Basisstation 201 und die Funk-Teilnehmerstationen 202, 203 können beispielsweise einem Wireless Local Area Network, einem WiMAX-, einem UMTS-, einem LTE-, einem 5G-Mobilfunknetz oder einem sonstigen Mobilfunknetz zugeordnet sein. Darüber hinaus sind die Funk-Basisstation 201 einerseits und die Funk-Teilnehmerstationen 202, 203 andererseits dafür ausgestaltet und eingerichtet, über die Funk-Basisstation 201 Datenrahmen 10, 20 auszutauschen, die über ausgewählte Trägerfrequenzen übertragen werden. Die Datenrahmen 10, 20 umfassen im vorliegenden Ausführungsbeispiel insbesondere Prozessdaten bzw. Mess- und Steuerungsgrößen, die mit den Funk-Teilnehmerstationen 202, 203 verbundenen Fahrzeugen bzw. Sensoren, Maschinen oder Anlagen 300 zugeordnet sind.

Zusätzlich umfassen die Funk-Basisstation 201 und die Funk-Teilnehmerstationen 202, 203 jeweils eine Multiplexereinheit 212, 222, 232 für redundant zu sendende Datenrahmen 10, 20. Dabei übertragen die Funk-Basisstation 201 und die Funk-Teilnehmerstationen 202, 203 jeweils redundant zu sendende Datenrahmen 10, 20 parallel über mehrere voneinander verschiedene Trägerfrequenzen 11-13, 21-23. Außerdem sind die Funk-Basisstation 201 und die Funk-Teilnehmerstationen 202, 203 jeweils dafür ausgestaltet und eingerichtet, für eine Übertragung redundant zu sendender Datenrahmen verwendete Trägerfrequenzen entsprechend Inter-band Carrier Aggregation zu separieren. Vorzugsweise hören die Funk-Basisstation 201 und die Funk-Teilnehmerstationen 202, 203 jeweils für eine CSMA-Kollisionsvermeidung und zur Anwendung von Listen Before Talk eine größere Anzahl von Trägerfrequenzen ab als tatsächlich verwendet. Entsprechend einer vorteilhaften Realisierungsvariante sind die Multiplexereinheiten 212, 222, 232 jeweils dafür ausgestaltet und eingerichtet, über voneinander verschiedene Trägerfrequenzen redundant zu sendende Datenrahmen entsprechend jeweils unterschiedlicher Codierungsschemata zu codieren.

Des Weiteren umfassen die Funk-Basisstation 201 und die Funk-Teilnehmerstationen 202, 203 jeweils eine Redundanzbehandlungseinheit 213, 223, 233 zur Verarbeitung empfangener redundanter Datenrahmen. Die Redundanzbehandlungseinheiten 213, 223, 233 sind jeweils für eine Detektion empfangener redundanter Datenrahmen bzw. für eine Wiederherstellung redundant gesendeter Datenrahmen aus unterschiedlichen Datenrahmenfragmenten ausgestaltet und eingerichtet. Die Wiederherstellung redundant gesendeter Datenrahmen aus unterschiedlichen Datenrahmenfragmenten erfolgt dabei vorzugsweise mittels Maximum-ratio Combining, Selection Combining oder Incremental Redundancy.

Im vorliegenden Ausführungsbeispiel ermitteln die Funk-Basisstation 201 und die Funk-Teilnehmerstationen 202, 203 jeweils Signalqualitätswerte bzw. Übertragungsfehler für Trägerfrequenzen, die zur Übertragung redundant zu sendender Datenrahmen verwendet werden. Anhand ermittelter Signalqualitätswerte bzw. Übertragungsfehler führen die Funk-Basisstation 201 bzw. die Funk-Teilnehmerstationen 202, 203 eine Coderaten-Adaption für eine Übertragung redundant zu sendender Datenrahmen durch. Insbesondere erfolgt bei einem unterhalb eines vorgegebenen Schwellwerts liegendem Signalqualitätswert bzw. bei oberhalb eines vorgegebenen Schwellwerts liegenden Übertragungsfehlern eine Coderaten-Verringerung. Dagegen erfolgt bei einem oberhalb eines vorgegebenen Schwellwerts liegendem Signalqualitätswert bzw. bei unterhalb eines vorgegebenen Schwellwerts liegenden Übertragungsfehlern eine Coderaten-Erhöhung. Entsprechend einer bevorzugten Ausführungsform erfolgt die Coderaten-Adaption Trägerfrequenz-individuell.

Darüber hinaus sind die Funk-Basisstation 201 und die Funk-Teilnehmerstationen 202, 203 jeweils dafür ausgestaltet und eingerichtet, anhand ermittelter Signalqualitätswerte bzw. Übertragungsfehler geänderte oder zusätzliche Trägerfrequenzen für eine Übertragung redundant zu sendender Datenrahmen auszuwählen oder verwendete Trägerfrequenzen freizugeben. Potentielle Interferenzquellen bzw. störungsfrei nutzbare Trägerfrequenzen werden dabei vorteilhafterweise mittels Cognitive Radio ermittelt. Ferner können die Funk-Basisstation 201 und die Funk-Teilnehmerstationen 202, 203 jeweils dafür konfiguriert werden, für eine Übertragung als zeitkritisch gekennzeichneter Datenrahmen nicht mehr benötigter Trägerfrequenzen temporär für eine Übertragung als zeitunkritisch gekennzeichneter Datenrahmen freizugeben. Beispielsweise teilen die Funk-Basisstation 201 bzw. die Funk-Teilnehmerstationen 202, 203 dabei temporär für eine Übertragung als zeitunkritisch gekennzeichneter Datenrahmen freigegebene Trägerfrequenzen präemptiv für eine Übertragung als zeitkritisch gekennzeichneter Datenrahmen zu. Dies ermöglicht eine besonders effiziente Nutzung zur Verfügung stehender Trägerfrequenzen, ohne zeitkritischen Datenverkehr zu beeinträchtigen.

## Patentansprüche

1. Funk-Kommunikationssystem für ein industrielles Automatisierungssystem mit
- zumindest einer Funk-Basisstation (201), die zumindest eine Funk-Sende- und -Empfangseinheit (211) umfasst,
- zumindest einer mit der Funk-Basisstation verbindbaren Funk-Teilnehmerstation (202, 203), die zumindest eine Funk-Sende- und -Empfangseinheit (221, 231) umfasst,
- wobei die Funk-Basisstation und die Funk-Teilnehmerstation dafür ausgestaltet und eingerichtet sind, miteinander Datenrahmen (10, 20) auszutauschen, die zumindest über eine ausgewählte Trägerfrequenz übertragen werden, und redundant zu sendende Datenrahmen parallel über mehrere voneinander verschiedene Trägerfrequenzen (11-13, 21-23) zu übertragen,
- wobei die Funk-Basisstation und die Funk-Teilnehmerstation jeweils eine Multiplexereinheit (212, 222, 232) für redundant zu sendende Datenrahmen und eine Redundanzbehandlungseinheit (213) zur Verarbeitung empfangener redundanter Datenrahmen umfassen, wobei die Redundanzbehandlungseinheiten jeweils für eine Detektion empfangener redundanter Datenrahmen und/oder für eine Wiederherstellung redundant gesendeter Datenrahmen aus unterschiedlichen Datenrahmenfragmenten ausgestaltet und eingerichtet sind,
**dadurch gekennzeichnet, dass**
- die Redundanzbehandlungseinheiten jeweils für eine Wiederherstellung redundant gesendeter Datenrahmen aus unterschiedlichen Datenrahmenfragmenten mittels Maximum-ratio Combining, Selection Combining oder Incremental Redundancy ausgestaltet und eingerichtet sind,
- die Funk-Basisstation und die Funk-Teilnehmerstation jeweils dafür ausgestaltet und eingerichtet sind, für eine Übertragung als zeitkritisch gekennzeichneter Datenrahmen nicht mehr benötigter Trägerfrequenzen temporär für eine Übertragung als zeitunkritisch gekennzeichneter Datenrahmen freizugeben.

2. Kommunikationssystem nach Anspruch 1,
bei dem die Funk-Basisstation und die Funk-Teilnehmerstation jeweils dafür ausgestaltet und eingerichtet sind, für eine Übertragung redundant zu sendender Datenrahmen verwendete Trägerfrequenzen entsprechend Inter-band Carrier Aggregation zu separieren.

3. Kommunikationssystem nach einem der Ansprüche 1 oder 2,
bei dem die Multiplexereinheiten jeweils dafür ausgestaltet und eingerichtet sind, über voneinander verschiedene Trägerfrequenzen redundant zu sendende Datenrahmen entsprechend jeweils unterschiedlicher Codierungsschemata zu codieren.

4. Kommunikationssystem nach einem der Ansprüche 1 bis 3,
bei dem die Funk-Basisstation und die Funk-Teilnehmerstation jeweils dafür ausgestaltet und eingerichtet sind, für eine Übertragung redundant zu sendender Datenrahmen verwendete Trägerfrequenzen Signalqualitätswerte und/oder Übertragungsfehler zu ermitteln.

5. Kommunikationssystem nach Anspruch 4,
bei dem die Funk-Basisstation und die Funk-Teilnehmerstation jeweils dafür ausgestaltet und eingerichtet sind, anhand ermittelter Signalqualitätswerte und/oder Übertragungsfehler eine Coderaten-Adaption für eine Übertragung redundant zu sendender Datenrahmen durchzuführen.

6. Kommunikationssystem nach Anspruch 5,
bei dem bei einem unterhalb eines vorgegebenen Schwellwerts liegendem Signalqualitätswert und/oder bei oberhalb eines vorgegebenen Schwellwerts liegenden Übertragungsfehlern eine Coderaten-Verringerung erfolgt.

7. Kommunikationssystem nach einem der Ansprüche 5 oder 6,
bei dem bei einem oberhalb eines vorgegebenen Schwellwerts liegendem Signalqualitätswert und/oder bei unterhalb eines vorgegebenen Schwellwerts liegenden Übertragungsfehlern eine Coderaten-Erhöhung erfolgt.

8. Kommunikationssystem nach einem der Ansprüche 5 bis 7,
bei dem die Coderaten-Adaption Trägerfrequenz-individuell erfolgt.

9. Kommunikationssystem nach Anspruch 4,
bei dem die Funk-Basisstation und die Funk-Teilnehmerstation jeweils dafür ausgestaltet und eingerichtet sind, anhand ermittelter Signalqualitätswerte und/oder Übertragungsfehler geänderte oder zusätzliche Trägerfrequenzen für eine Übertragung redundant zu sendender Datenrahmen auszuwählen oder verwendete Trägerfrequenzen freizugeben.

10. Kommunikationssystem nach Anspruch 9,
bei dem die Funk-Basisstation und die Funk-Teilnehmerstation jeweils dafür ausgestaltet und eingerichtet sind, potentielle Interferenzquellen und/oder störungsfrei nutzbare Trägerfrequenzen mittels Cognitive Radio zu ermitteln.

11. Kommunikationssystem nach einem der Ansprüche 1 bis 10, bei dem die Funk-Basisstation und die Funk-Teilnehmerstation jeweils dafür ausgestaltet und eingerichtet sind, temporär für eine Übertragung als zeitunkritisch gekennzeichneter Datenrahmen freigegebene Trägerfrequenzen präemptiv für eine Übertragung als zeitkritisch gekennzeichneter Datenrahmen zuzuteilen.

12. Kommunikationssystem nach einem der Ansprüche 1 bis 11, bei dem die Funk-Basisstation und die Funk-Teilnehmerstation jeweils für eine CSMA-Kollisionsvermeidung und zur Anwendung von Listen Before Talk für ein Abhören einer größeren Anzahl von Trägerfrequenzen als tatsächlich verwendet ausgestaltet sind.

13. Kommunikationssystem nach einem der Ansprüche 1 bis 12, bei dem die Funk-Basisstation und die Funk-Teilnehmerstation einem Wireless Local Area Network, einem WiMAX-, einem UMTS-, einem LTE-, einem 5G-Mobilfunknetz oder einem sonstigen Mobilfunknetz zugeordnet sind.

14. Funk-Basisstation für ein Kommunikationssystem nach einem der Ansprüche 1 bis 13 mit
- zumindest einer Funk-Sende- und -Empfangseinheit,
- einer Multiplexereinheit für redundant zu sendende Datenrahmen,
- einer Redundanzbehandlungseinheit zur Verarbeitung empfangener redundanter Datenrahmen, wobei die Redundanzbehandlungseinheit für eine Detektion empfangener redundanter Datenrahmen und/oder für eine Wiederherstellung redundant gesendeter Datenrahmen aus unterschiedlichen Datenrahmenfragmenten ausgestaltet und eingerichtet ist,
- wobei die Funk-Basisstation dafür ausgestaltet und eingerichtet ist, mit zumindest einer Funk-Teilnehmerstation Datenrahmen auszutauschen, die zumindest über eine ausgewählte Trägerfrequenz übertragen werden,
- wobei die Funk-Basisstation dafür ausgestaltet und eingerichtet ist, redundant zu sendende Datenrahmen parallel über mehrere voneinander verschiedene Trägerfrequenzen zu übertragen,
**dadurch gekennzeichnet, dass**
- die Redundanzbehandlungseinheit für eine Wiederherstellung redundant gesendeter Datenrahmen aus unterschiedlichen Datenrahmenfragmenten mittels Maximum-ratio Combining, Selection Combining oder Incremental Redundancy ausgestaltet und eingerichtet ist,
- die Funk-Basisstation dafür ausgestaltet und eingerichtet ist, für eine Übertragung als zeitkritisch gekennzeichneter Datenrahmen nicht mehr benötigter Trägerfrequenzen temporär für eine Übertragung als zeitunkritisch gekennzeichneter Datenrahmen freizugeben.

15. Funk-Teilnehmerstation für ein Kommunikationssystem nach einem der Ansprüche 1 bis 13 mit
- zumindest einer Funk-Sende- und -Empfangseinheit,
- einer Multiplexereinheit für redundant zu sendende Datenrahmen,
- einer Redundanzbehandlungseinheit zur Verarbeitung empfangener redundanter Datenrahmen, wobei die Redundanzbehandlungseinheit für eine Detektion empfangener redundanter Datenrahmen und/oder für eine Wiederherstellung redundant gesendeter Datenrahmen aus unterschiedlichen Datenrahmenfragmenten ausgestaltet und eingerichtet ist,
- wobei die Funk-Teilnehmerstation dafür ausgestaltet und eingerichtet ist, mit zumindest einer Funk-Basisstation Datenrahmen auszutauschen, die zumindest über eine ausgewählte Trägerfrequenz übertragen werden,
- wobei die Funk-Teilnehmerstation dafür ausgestaltet und eingerichtet ist, redundant zu sendende Datenrahmen parallel über mehrere voneinander verschiedene Trägerfrequenzen zu übertragen,
**dadurch gekennzeichnet, dass**
- die Redundanzbehandlungseinheit für eine Wiederherstellung redundant gesendeter Datenrahmen aus unterschiedlichen Datenrahmenfragmenten mittels Maximum-ratio Combining, Selection Combining oder Incremental Redundancy ausgestaltet und eingerichtet ist,
- die Funk-Teilnehmerstation dafür ausgestaltet und eingerichtet ist, für eine Übertragung als zeitkritisch gekennzeichneter Datenrahmen nicht mehr benötigter Trägerfrequenzen temporär für eine Übertragung als zeitunkritisch gekennzeichneter Datenrahmen freizugeben.

16. Verfahren zum Betrieb eines Funk-Kommunikationssystems für ein industrielles Automatisierungssystem nach einem der Ansprüche 1 bis 13, bei dem
- das Funk-Kommunikationssystem zumindest eine Funk-Basisstation (201), die zumindest eine Funk-Sende- und -Empfangseinheit (211) umfasst, und zumindest eine mit der Funk-Basisstation verbindbare Funk-Teilnehmerstation (202, 203) aufweist, die zumindest eine Funk-Sende- und - Empfangseinheit (221, 231) umfasst,
- die Funk-Basisstation und die Funk-Teilnehmerstation miteinander Datenrahmen (10, 20) austauschen, die zumindest über eine ausgewählte Trägerfrequenz übertragen werden,
- die Funk-Basisstation und die Funk-Teilnehmerstation jeweils eine Multiplexereinheit (212, 222, 232) für redundant zu sendende Datenrahmen umfassen,
- die Funk-Basisstation und die Funk-Teilnehmerstation jeweils redundant zu sendende Datenrahmen parallel über mehrere voneinander verschiedene Trägerfrequenzen (11-13, 21-23) übertragen,
- die Funk-Basisstation und die Funk-Teilnehmerstation jeweils eine Redundanzbehandlungseinheit (213, 223, 233) zur Verarbeitung empfangener redundanter Datenrahmen umfassen,
- die Redundanzbehandlungseinheiten jeweils empfangene redundante Datenrahmen detektieren und/oder redundant gesendete Datenrahmen aus unterschiedlichen Datenrahmenfragmenten wiederherstellen.
**dadurch gekennzeichnet, dass**
- die Redundanzbehandlungseinheiten jeweils redundant gesendete Datenrahmen aus unterschiedlichen Datenrahmenfragmenten mittels Maximum-ratio Combining, Selection Combining oder Incremental Redundancy wiederherstellen,
- die Funk-Basisstation und die Funk-Teilnehmerstation jeweils für eine Übertragung als zeitkritisch gekennzeichneter Datenrahmen nicht mehr benötigter Trägerfrequenzen temporär für eine Übertragung als zeitunkritisch gekennzeichneter Datenrahmen freigeben.

## Claims

1. Radio communication system for an industrial automation system, having
- at least one radio base station (201), which comprises at least one radio transmission and reception unit (211),
- at least one radio subscriber station (202, 203), which is connectable to the radio base station and comprises at least one radio transmission and reception unit (221, 231),
- wherein the radio base station and the radio subscriber station are designed and configured to interchange data frames (10, 20) with one another, said data frames being transmitted using at least one selected carrier frequency, and to transmit data frames that are to be sent redundantly in parallel using multiple different carrier frequencies (11-13, 21-23),
- wherein the radio base station and the radio subscriber station each comprise a multiplexer unit (212, 222, 232) for data frames that are to be sent redundantly, and comprise a redundancy handling unit (213) for processing received redundant data frames, wherein the redundancy handling units are each designed and configured to detect received redundant data frames and/or to restore redundantly sent data frames from different data frame fragments,
**characterized in that**
- the redundancy handling units are each designed and configured to restore redundantly sent data frames from different data frame fragments by means of maximum ratio combining, selection combining or incremental redundancy,
- the radio base station and the radio subscriber station are each designed and configured to temporarily enable carrier frequencies that are no longer needed for transmitting data frames identified as time-critical for transmitting data frames identified as non-time-critical.

2. Communication system according to Claim 1,
in which the radio base station and the radio subscriber station are each designed and configured to separate carrier frequencies used for transmitting data frames that are to be sent redundantly in accordance with interband carrier aggregation.

3. Communication system according to either of Claims 1 and 2,
in which the multiplexer units are each designed and configured to encode data frames that are to be sent redundantly using different carrier frequencies in accordance with respective different coding schemes.

4. Communication system according to one of Claims 1 to 3, in which the radio base station and the radio subscriber station are each designed and configured to ascertain carrier frequencies used for transmitting data frames that are to be sent redundantly, signal quality values and/or transmission errors.

5. Communication system according to Claim 4,
in which the radio base station and the radio subscriber station are each designed and configured to take ascertained signal quality values and/or transmission errors as a basis for performing code rate adaptation for transmitting data frames that are to be sent redundantly.

6. Communication system according to Claim 5,
in which a signal quality value below a prescribed threshold value and/or transmission errors above a prescribed threshold value result in a code rate reduction being effected.

7. Communication system according to either of Claims 5 and 6,
in which a signal quality value above a prescribed threshold value and/or transmission errors below a prescribed threshold value result in a code rate increase being effected.

8. Communication system according to one of Claims 5 to 7,
in which the code rate adaptation is effected on a carrier-frequency-individual basis.

9. Communication system according to Claim 4,
in which the radio base station and the radio subscriber station are each designed and configured to take ascertained signal quality values and/or transmission errors as a basis for selecting changed or additional carrier frequencies for transmitting data frames that are to be sent redundantly or enabling carrier frequencies that are used.

10. Communication system according to Claim 9,
in which the radio base station and the radio subscriber station are each designed and configured to ascertain potential sources of interference and/or carrier frequencies usable without interference by means of cognitive radio.

11. Communication system according to one of Claims 1 to 10, in which the radio base station and the radio subscriber station are each designed and configured to pre-emptively allocate carrier frequencies temporarily enabled for transmitting data frames identified as non-time-critical for transmitting data frames identified as time-critical.

12. Communication system according to one of Claims 1 to 11, in which the radio base station and the radio subscriber station are each designed to accomplish CSMA collision avoidance and to use listen before talk by listening in on a larger number of carrier frequencies than is actually used.

13. Communication system according to one of Claims 1 to 12, in which the radio base station and the radio subscriber station are assigned to a wireless local area network, a WiMAX mobile radio network, a UMTS mobile radio network, an LTE mobile radio network, a 5G mobile radio network or another mobile radio network.

14. Radio base station for a communication system according to one of Claims 1 to 13, having
- at least one radio transmission and reception unit,
- a multiplexer unit for data frames that are to be sent redundantly,
- a redundancy handling unit for processing received redundant data frames, wherein the redundancy handling unit is designed and configured to detect received redundant data frames and/or to restore redundantly sent data frames from different data frame fragments,
- wherein the radio base station is designed and configured to interchange data frames transmitted using at least one selected carrier frequency with at least one radio subscriber station,
- wherein the radio base station is designed and configured to transmit data frames that are to be sent redundantly in parallel using multiple different carrier frequencies, **characterized in that**
- the redundancy handling unit is designed and configured to restore redundantly sent data frames from different data frame fragments by means of maximum ratio combining, selection combining or incremental redundancy,
- the radio base station is designed and configured to temporarily enable carrier frequencies that are no longer needed for transmitting data frames identified as time-critical for transmitting data frames identified as non-time-critical.

15. Radio subscriber station for a communication system according to one of Claims 1 to 13, having
- at least one radio transmission and reception unit,
- a multiplexer unit for data frames that are to be sent redundantly,
- a redundancy handling unit for processing received redundant data frames, wherein the redundancy handling unit is designed and configured to detect received redundant data frames and/or to restore redundantly sent data frames from different data frame fragments,
- wherein the radio subscriber station is designed and configured to interchange data frames transmitted using at least one selected carrier frequency with at least one radio base station,
- wherein the radio subscriber station is designed and configured to transmit data frames that are to be sent redundantly in parallel using multiple different carrier frequencies,
**characterized in that**
- the redundancy handling unit is designed and configured to restore redundantly sent data frames from different data frame fragments by means of maximum ratio combining, selection combining or incremental redundancy,
- the radio subscriber station is designed and configured to temporarily enable carrier frequencies that are no longer needed for transmitting data frames identified as time-critical for transmitting data frames identified as non-time-critical.

16. Method for operating a radio communication system for an industrial automation system according to one of Claims 1 to 13, in which
- the radio communication system has at least one radio base station (201), which comprises at least one radio transmission and reception unit (211), and at least one radio subscriber station (202, 203), which is connectable to the radio base station and comprises at least one radio transmission and reception unit (221, 231),
- the radio base station and the radio subscriber station interchange data frames (10, 20) with one another, said data frames being transmitted using at least one selected carrier frequency,
- the radio base station and the radio subscriber station each comprise a multiplexer unit (212, 222, 232) for data frames that are to be sent redundantly,
- the radio base station and the radio subscriber station each transmit data frames that are to be sent redundantly in parallel using multiple different carrier frequencies (11-13, 21-23),
- the radio base station and the radio subscriber station each comprise a redundancy handling unit (213, 223, 233) for processing received redundant data frames,
- the redundancy handling units each detect received redundant data frames and/or restore redundantly sent data frames from different data frame fragments,
**characterized in that**
- the redundancy handling units each restore redundantly sent data frames from different data frame fragments by means of maximum ratio combining, selection combining or incremental redundancy,
- the radio base station and the radio subscriber station each temporarily enable carrier frequencies that are no longer needed for transmitting data frames identified as time-critical for transmitting data frames identified as non-time-critical.

## Revendications

1. Système de radiocommunication d'un système d'automatisation industrielle, comprenant
- au moins un poste (201) radio de base, qui comprend au moins une unité (211) radio d'émission et de réception,
- au moins un poste (202, 203) radio de participant, qui peut être relié au poste radio de base et qui comprend au moins une unité (221, 231) radio d'émission et de réception,
- dans lequel le poste radio de base et le poste radio de participant sont conformés et conçus pour échanger entre eux des trames (10, 20) de données qui sont transmises, au moins sur une fréquence porteuse sélectionnée, et pour transmettre des trames de données à envoyer de manière redondante en parallèle sur plusieurs fréquences (11 à 13, 21 à 23) porteuses différentes les unes des autres,
- dans lequel le poste radio de base et les postes radio de participant comprennent chacun une unité (212, 222, 232) de multiplexage pour des trames de données à envoyer de manière redondante et une unité (213) de traitement de redondance pour le traitement de trames de données redondantes reçues, les unités de traitement de redondance étant conformées et conçues chacune pour une détection de trames de données redondantes reçues et/ou pour une reproduction de trames de donnée envoyées de manière redondante à partir de fragments différents de trames de données,
**caractérisé en ce que**
- les unités de traitement de redondance sont conformées et conçues chacune pour une reproduction de trames de données envoyées de manière redondante à partir de fragments différents de trames de données, au moyen de Maximum-ratio Combining, de Selection Combining ou d'Incremental Redundancy,
- la station radio de base et la station radio de participant sont conformées et conçues pour valider temporairement, pour une transmission comme trames de données caractérisées comme non critiques dans le temps, des fréquences porteuses qui ne sont plus nécessaires pour une transmission comme trames de données caractérisées comme critiques dans le temps.

2. Système de communication suivant la revendication 1,
dans lequel le poste radio de base et le poste radio de participant sont conformés et conçus chacun pour séparer, conformément à Inter-Band Carrier Aggregation des fréquences porteuses utilisées pour une transmission de trames de données à envoyer de manière redondante.

3. Système de communication suivant l'une des revendications 1 ou 2,
dans lequel les unités de multiplexage sont conformées et conçues chacune pour coder, conformément à des schémas de codage différents, respectivement, des trames de données à envoyer de manière redondante sur des fréquences porteuses différentes les unes des autres.

4. Système de communication suivant l'une des revendications 1 à 3,
dans lequel le poste radio de base et le poste radio de participant sont conformés et conçus chacun pour déterminer des valeurs de qualité du signal et/ou des défauts de transmission de fréquences porteuses utilisées pour une transmission de trames de données à envoyer de manière redondante.

5. Système de communication suivant la revendication 4,
dans lequel le poste radio de base et le poste radio de participant sont conformés et conçus chacun pour effectuer, à l'aide des valeurs de qualité du signal et/ou des défauts de transmission qui ont été déterminés, une adaptation de vitesse de codage pour une transmission de trames de données à envoyer de manière redondante.

6. Système de communication suivant la revendication 5,
dans lequel, pour une valeur de qualité du signal se trouvant en dessous d'une valeur de seuil donnée à l'avance et/ou pour des défauts de transmission se trouvant au-dessus d'une valeur de seuil donnée à l'avance, il se produit une diminution des vitesses de codage.

7. Système de communication suivant l'une des revendications 5 ou 6,
dans lequel, pour une valeur de qualité du signal se trouvant au-dessus d'une valeur de seuil donnée à l'avance et/ou pour des défauts de transmission se trouvant en dessous d'une valeur de seuil donnée à l'avance, il se produit une augmentation des vitesses de codage.

8. Système de communication suivant l'une des revendications 5 à 7,
dans lequel l'adaptation des vitesses de codage s'effectue individuellement suivant la fréquence porteuse.

9. Système de communication suivant la revendication 4,
dans lequel le poste radio de base et le poste radio de participant sont conformés et conçus chacun pour, à l'aide des valeurs de qualité du signal et/ou des défauts de transmission qui ont été déterminés, sélectionner des fréquences porteuses modifiées ou supplémentaires pour une transmission de trames de données à envoyer de manière redondante ou valider des fréquences porteuses utilisées.

10. Système de communication suivant la revendication 9,
dans lequel le poste radio de base et le poste radio de participant sont conformés et conçus chacun pour déterminer, au moyen de cognitive radio, des sources d'interférence potentielles et/ou des fréquences porteuses utilisables sans parasite.

11. Système de communication suivant l'une des revendications 1 à 10,
dans lequel le poste radio de base et le poste radio de participant sont conformés et conçus chacun pour affecter préemptivement pour une transmission comme trames de données caractérisées comme critiques dans le temps des fréquences porteuses validées pour une transmission comme trames de donnée caractérisées comme non critiques dans le temps.

12. Système de communication suivant l'une des revendications 1 à 11,
dans lequel le poste radio de base et le poste radio de participant sont conformés en étant utilisés réellement chacun pour empêcher une collision CSMA ou pour l'application de listes Before Talk pour une écoute d'un nombre plus grand de fréquences porteuses.

13. Système de communication suivant l'une des revendications 1 à 12,
dans lequel le poste radio de base et le poste radio de participant sont associés à un Wireless Local Area Network, à un réseau WiMAX, à un réseau UMTS, à réseau LTE, à un réseau de téléphonie mobile en 5G ou à un autre réseau de téléphonie mobile.

14. Poste radio de base d'un système de communication suivant l'une des revendications 1 à 13 comprenant
- au moins une unité radio d'émission et de réception,
- une unité de multiplexage pour des trames de données à envoyer de manière redondante,
- une unité de traitement de redondance pour le traitement de trames de données redondantes reçues, l'unité de traitement de redondance étant conformée et conçue pour une détection de trames de données redondantes reçues et/ou pour une reproduction de trames de données envoyées de manière redondante à partir de fragments différents de trame de données,
- dans lequel le poste radio de base est conformé et conçu pour échanger avec au moins un poste radio de participant des trames de données qui sont transmises au moins sur une fréquence porteuse sélectionnée,
- dans lequel le poste radio de base est conformé et conçu pour transmettre des trames de données à envoyer de manière redondante en parallèle sur plusieurs fréquences porteuses différentes les unes des autres,
**caractérisé en ce que**
- l'unité de traitement de redondance est conformée et conçue pour une reproduction de trames de données envoyées de manière redondante à partir de fragments différents de trames de données, au moyen de Maximum-ratio Combining, de Selection Combining ou d'Incremental Redundancy,
- la station radio de base est conformée et conçue pour valider temporairement, pour une transmission comme trames de données caractérisées comme non critiques dans le temps, des fréquences porteuses qui ne sont plus nécessaires à une transmission comme trames de données caractérisées comme critiques dans le temps.

15. Poste radio de participant d'un système de communication suivant l'une des revendications 1 à 13, comprenant
- au moins une unité radio d'émission et de réception,
- une unité de multiplexage pour des trames de données à envoyer de manière redondante,
- une unité de traitement de redondance pour traiter des trames de données redondantes reçues, l'unité de traitement de redondance étant conformée et conçue pour une détection de trames de données redondantes reçues et/ou pour une reproduction de trames de données envoyées de manière redondante à partir de fragments différents de trames de données,
- dans lequel le poste radio de participant est conformé et conçu pour échanger, avec au moins un poste radio de base, des trames de données qui sont transmises au moins sur une fréquence porteuse sélectionnée,
- dans lequel le poste radio de participant est conformé et conçu pour transmettre des trames de données à envoyer de manière redondante en parallèle sur plusieurs fréquences porteuses différentes les unes des autres,
**caractérisé en ce que**
- l'unité de traitement de redondance est conformée et conçue pour une reproduction de trames de données envoyées de manière redondante à partir de fragments différents de trames de données, au moyen de Maximum-ratio Combining, Selection Combining ou Incremental Redundancy,
- le poste radio de participant est conformé et conçu pour valider temporairement, pour une transmission comme trames de données caractérisées de manière non critique dans le temps, des fréquences porteuses qui ne sont plus utilisées pour une transmission comme trames de données caractérisées comme critiques dans le temps.

16. Procédé pour faire fonctionner un système radio de communication d'un système d'automatisation industrielle suivant l'une des revendications 1 à 13, dans lequel
- le système radio de communication comporte au moins un poste (201) radio de base, qui comprend au moins une unité (211) radio d'émission et de réception et au moins un poste (202, 203) radio de participant, qui peut être relié au poste radio de base et qui comprend au moins une unité (221, 231) radio d'émission et de réception,
- le poste radio de base et le poste radio de participant échangent entre eux des trames (10, 20) de données qui sont transmises au moins sur une fréquence porteuse sélectionnée,
- le poste radio de base et le poste radio de participant comprennent chacun une unité (212, 222, 232) de multiplexage pour des trames de données à envoyer de manière redondante,
- le poste radio de base et le poste radio de participant transmettent chacun des trames de données à envoyer de manière redondante en parallèle sur plusieurs fréquences (11 à 13, 21 à 23) porteuses différentes les unes des autres,
- le poste radio de base et le poste radio de participant comprennent chacun une unité (213, 223, 233) de traitement de redondance pour le traitement de trames de données redondantes reçues,
- les unités de traitement de redondance détectent des trames de données redondantes reçues, respectivement, et/ou reproduisent des trames de données envoyées de manière redondante à partir de fragments différents de trames de données,
**caractérisé en ce que**
- les unités de traitement de redondance reproduisent des trames de données envoyées de manière redondante, respectivement, à partir de fragments différents de trames de données au moyen de Maximum-ratio Combining, Selection Combining ou Incremental Redundancy,
- le poste radio de base et le poste radio de participant valident temporairement, pour une transmission comme trames de données caractérisées comme non critiques dans le temps, des fréquences porteuses qui ne sont plus nécessaires pour une transmission comme trames de données caractérisées comme critiques dans le temps.
